# EUROPEAN PATENT APPLICATION

(11) **EP 1 462 237 A1**
(43) Date of publication of application: **29.09.2004**
(21) Application number: 02779920.4
(22) Date of filing: 25.10.2002
(51) Int. Cl.: B29C 65/08, B23K 20/10

(54) **ULTRASONIC VIBRATION WELDING DEVICE AND ULTRASONIC VIBRATION HORN**

(30) Priority: 03.12.2001 JP 2001368604
(71) Applicant: Mishima, Taiji, Atsugi-shi, Kanagawa-ken 243-0021 (JP)
(72) Inventor: TAMAMOTO, Osamu, c/o Branson Ultrasonics, Atsugi-shi, Kanagawa 243-0021 (JP)
(74) Representative: Liesegang, Roland, Dr.-Ing.
(86) International application number: PCT/JP2002/011089
(87) International publication number: WO 2003/047844

(57) **Abstract**

There is provided an ultrasonic vibration welding equipment (1000) and an ultrasonic vibration horn (2000, 2000' or 2000") in which a sufficient path line for welding operation is secured and ultrasonic vibration of vertical component is not induced. An ultrasonic vibration horn (2000, 2000' or 2000") fixed to an ultrasonic vibration welding equipment in which welding members including hot-melt materials such as thermoplastic resins are contacted with each other under pressure and subjected to a welding treatment by applying ultrasonic vibration, characterized in that a convergently inclined working surface (2110) and a corresponding surface (2110X) thereof are arranged on a welding operation part (2100) having a symmetrical section with regard to a central axial line (L) along to a longer direction thereof, while a concave part (2133) extended to the working surface (2110) and the corresponding surface (2110X) is formed so that only ultrasonic vibration parallel to the welding working surface (2110) is induced on the working surface (2110).

## Description

### FIELD OF THE INVENTION

This invention belongs to technology of ultrasonic vibration welding for thermoplastic resins and metals by applying lateral ultrasonic vibration by means of an ultrasonic horn as a resonator and relates to an ultrasonic vibration welding equipment and an ultrasonic vibration horn.

### BACKGROUND OF THE INVENTION

In a conventional method of ultrasonic vibration welding, it has been well known that a resonator (ultrasonic horn) is kept contact with a member to be welded while inducing ultrasonic vibration, thereby a side surface parallel to the central axis of horn being used, and is slightly stretched and contracted in the axial direction to weld the member (Conventional Art).

There has also been filed an invention of the present applicant as Japanese Patent application No. 2001-7240 (Prior Art).

According to the invention of prior art, it is possible to secure a path line necessary to welding treatment operations and induce only a parallel directed vibration component (lateral vibration) on an operating surface so as to facilitate a vibration welding operation of high quality without inducing any vertical vibration component (vertical component), which might be inconvenient for welding.

According to the above mentioned invention, however, an ultrasonic vibration horn is one-sidedly fixed to an ultrasonic vibrating means to a declined direction, while a nodal point on a column part thereof is supported by a support means 200, so that a conjugating and welding part is supported by two points in a one-sided situation.

As a result, inclination of the operating surface is negligible without hindrance during a welding treatment when the pressure added to a conjugating member is low as, for example, 10 kgf. It is apparently difficult to conduct the welding treatment of high quality without hindrance when the pressure increases with an increase in an area to be operated, because of slight inclination of the operating surface although it is an order of several micron.

As a matter of course, the surface is not inclined to prevent such inconvenience by the use of a one-wavelength horn instead of half-wavelength type, which makes it difficult, however, to downsize the equipment and increases in its weight, while it takes a time inevitably to adjust each part accurately.

U.S. Patent No. 4,088,257 discloses a similar invention in which the pressure is added just above the operating surface (Known Technique).

According to the known technique, although the above mentioned surface inclination can be avoided, it is inevitable to prevent a vertical component of ultrasonic vibration as an inconvenient factor of welding treatment.

This invention has been completed to improve conventional inconvenience as described above and provides originality.

Accordingly, objects of this invention are as in the following.

It is an object of this invention is to provide an ultrasonic vibration welding equipment in which a path line is secured sufficiently to facilitate a welding treatment operation.

Further object of this invention is to provide an ultrasonic vibration welding equipment in which a vertical component of ultrasonic vibration is excluded from a working surface of an ultrasonic horn, while only vibration parallel to the working surface is induced to greatly improve adhesion accuracy between welded members.

Another object of this invention is to provide an ultrasonic vibration welding equipment in which a working surface is not inclined when high pressure is added.

Yet another object of this invention is to provide an ultrasonic vibration welding equipment in which vibratory damping from an ultrasonic horn is decreased by deflective vibration thereof, while depth of the horn is lengthened to increase available frequency and its wavelength is one or less, the equipment being able to be downsized.

### SUMMARY OF THE INVENTION

The most characteristic feature of this invention is that an ultrasonic vibration horn is specifically formed not to induce ultrasonic vibration at a nodal point, which is arranged just above a working surface to support the horn capable of being pressurized.

This invention will be summarized as in the following:
(1) An ultrasonic vibration welding equipment in which welding members including hot-melt materials such as thermoplastic resins are contacted with each other under pressure and subjected to a welding treatment by applying ultrasonic vibration, characterized in that a nodal point where no vibration is induced vibration is arranged just above a working surface of said welding treatment, while an ultrasonic vibration horn is supported in the vicinity of the nodal point.
(2) An ultrasonic vibration welding equipment described in the above item (1) in which an ultrasonic vibration horn is arranged to incline a central axial line thereof at an angle of about 20 to 50° to a working surface. This allows to pressurize the working surface enough to facilitate welding effectively. Further, a sufficient path line can be secured.
(3) An ultrasonic vibration horn fixed to an ultrasonic vibration welding equipment in which welding members including hot-melt materials such as thermoplastic resins are contacted with each other under pressure and subjected to a welding treatment by applying ultrasonic vibration, characterized in that a convergently inclined working surface and a corresponding surface thereof are arranged on a welding operation part having a symmetrical section with regard to a central axial line along to a longer direction thereof, while a concave part extended to the working surface and the corresponding surface is formed so that only ultrasonic vibration parallel to the welding working surface is induced on the working surface.
(4) An ultrasonic vibration horn described in the above item (3) in which an inclined angle of said concave part is an obtuse angle.
(5) An ultrasonic vibration horn described in the above item (4) in which the obtuse angle is 90 to 180° . This allows to induce only ultrasonic vibration parallel to the working surface thereon to facilitate a welding treatment effectively.

### BRIEF DESCRIPTUON OF THE DRAWINGS

Fig. 1 is a functional block diagram of an ultrasonic vibration welding equipment according to the best embodiment 1 of the invention.

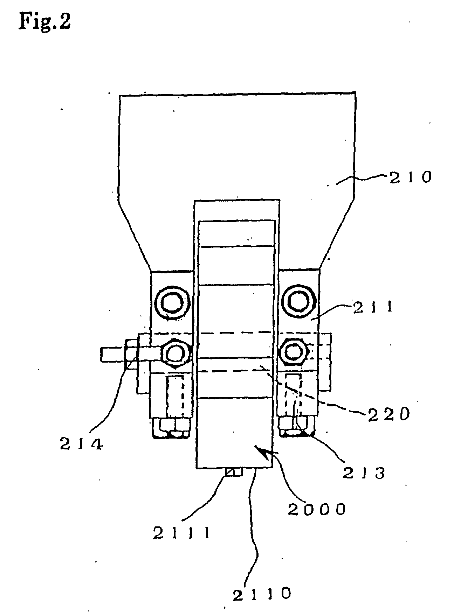

Fig. 2 is a front view of an ultrasonic vibration horn and a nodal support means shown in Fig. 1.
Fig. 3 is an enlarged side view of an ultrasonic vibration horn.
Fig. 4 is a model side view simulated vibration vectors of an ultrasonic vibration horn shown in Fig. 2 under a compressed condition.
Fig. 5 is a model side view simulated vibration vectors of an ultrasonic vibration horn shown in Fig. 2 under a tensed condition.
Fig. 6 is an amplitude distribution of an ultrasonic vibration horn.
Fig. 7 is a model side view of the preferred embodiment 2 shown in Fig. 4.
Fig. 8 is a model side view of the preferred embodiment 3 shown in Fig. 4.
Fig. 9 is an illustration of a pressurizing means of an ultrasonic vibration horn shown in Fig. 8.

### THE PREFERRED EMBODIMENTS OF THED INVENTION

Referring now to the drawings of preferred embodiments, there will be described an ultrasonic vibration welding equipment (the present equipment) 1000 and a ultrasonic vibration horn thereof (the present horn) 2000.

### (Preferred Embodiment 1)

### 1. General Structure

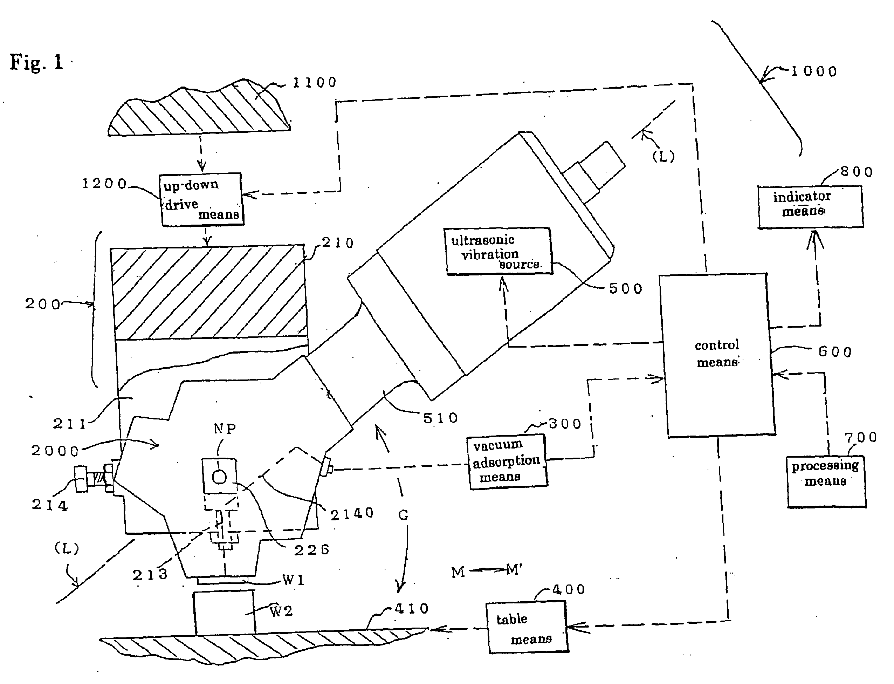

As shown in Fig. 1, the present horn 2000 in the present equipment 1000 is supported
at a nodal point NP by a nodal support means 200 and is connected to an ultrasonic vibration generator (vibration source means) 500 in a one-sided situation while inclining a central axis line (L) thereof at an inclined angle (A) of about 20 to 50° to a support surface 410 of a table means 400 for setting a member to be welded W2. Ultrasonic vibration is applied to the present horn 2000 through a control means 600 such as a computer as will be described below.

### 2. Structure of Each Part

### (1) The Present Equipment 1000

### ① Nodal Support Means 200

The nodal support means 200, connected to an up-down drive means 1200 fixed to a frame 1100 of the present equipment 1000, houses the present horn 2000 between support legs 211 fixed vertically under a main frame 210 as described below. A square sectional support rod 220 is penetrated through a fitting hole 212 formed at the nodal point NP of the present horn 2000, while both ends thereof are penetrated into the support legs 211 and fixed by means of a first screw 213 for vertical adjustment and a second screw 214 for lateral adjustment so as to adjust a position of the support rod 220 between the support legs 211.

### ② Ultrasonic Vibration Source Means 500

The ultrasonic vibration source means 500 comprises an ultrasonic oscillator, Converter, booster, etc., and is connected to the present horn 2000 to keep its central axis line (L) inclined to a working surface (S) in a one-sided situation. On the other hand; Ultrasonic vibration is induced by a power source means (not shown) and supplied to the present horn 2000.

### ③ Vacuum Adsorption Means 300

A vacuum adsorption means 300 used in the present equipment 1000 makes it possible to adsorb a welding member W1 and meet with a member to be welded W2 by connecting a vacuum power source (not shown) to a vent 2134, which is connected to a vacuum hole 2111 of the present horn 2000.

### ④ Table Means 400

A table means 400 is freely movable in the X-Y direction so that the member to be welded W2 set thereon can just meet with the welding member W1 adsorbed by the present horn 2000, followed by ultrasonic vibration welding.

### ⑤ Control Means 600

A control means 600 comprises a data processing personal computer as shown in Fig. 1 and is operated manually by a operation panel (means) 700 to give operational instructions to each means, while operational situations are displayed on a display means 800 such as a liquid crystal panel.

### ⑥ Ultrasonic vibration Horn (the present horn) 2000

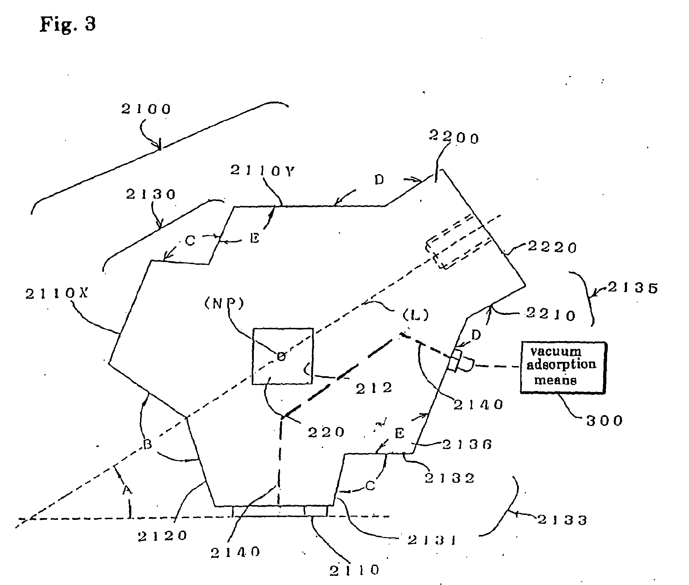

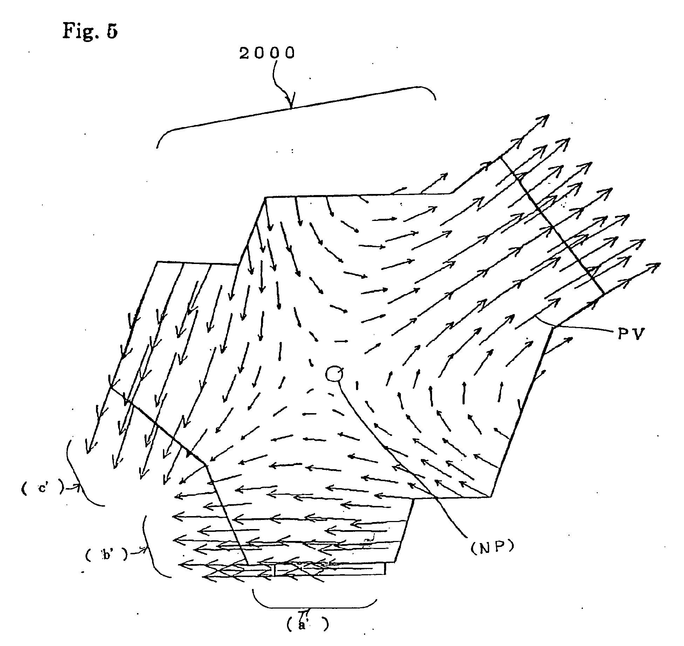

The ultrasonic vibration horn 2000 is made of, for example, a titanium alloy or steel material and comprises an apparently flat and polygonal weld-operation part 2100 and a column part 2200 having an inner end surface 2220 connected to a connection rod 510 of the ultrasonic vibration source means 500 as shown in Figs. 3 and 5.

On an outer end of the weld-operation part 2100, there are formed an inclined working surface 2110 and a vacuum hole 2111 to keep in contact with the welding member W1 and hold it by adsorption during a vibration welding treatment by connecting to the vacuum adsorption means 300, thereby the welding member W1 being adsorbed.

Numeral mark 2110X shown in the drawings designates a corresponding surface formed symmetrically with the working surface 2110 regarding to the central axial line (L).

On the outer surface of the weld-operation part 2100, there is formed a concave surface 2120 having the deepest center on the central axial line (L) of the column part 2200, which concave angle B is about 90 to 180°. There is also formed a concave and convex portion 2130 in the direction to the central axial line (L).

The concave and convex portion 2130 will be further detailed in the following.
(a) A first concave portion 2133 is defined by a first short concave surface 2131 and a first convex surface 2132. The concave surface 2131 extends to the adjacent working surface 2110 and is parallel to the corresponding surface 2110X symmetrical with regard to the central axial line (L), while the convex surface 2131 extends to the first concave surface 2131 and is parallel to the adjacent working surface 2110.
(b) A second concave portion 2134 is defined by a second longer concave surface
   2134 and an outer peripheral surface 2210 of the column part 2200. The concave surface 2134 extends to the first convex surface 2132 and is parallel to the corresponding surface 2110X symmetrical with regard to the central axial line(L), while the outer surface 2210 extends to the second long concave surface 2134. A convex portion 2136 is formed between first and the second concave portions 2133 and 2135 at a convex angle of about 110° .
(c) A first included angle C between the first concave surface 2131 and the first
   convex surface 2132 is about 90 to 180° , while a second included angle D between the first convex surface 2132 and the outer peripheral surface 2210 of the column part 2200 is about 140° .
(d) The column part 2200 has the inner end surface 2220 which extends to the outer peripheral surface 2210 and cuts the central axial line (L) at right angles.

Further, a penetrated hole 2140 is formed to connect the vacuum hole 2111 on the working surface 2110 of the present horn 2000 to the vacuum adsorption means 300.

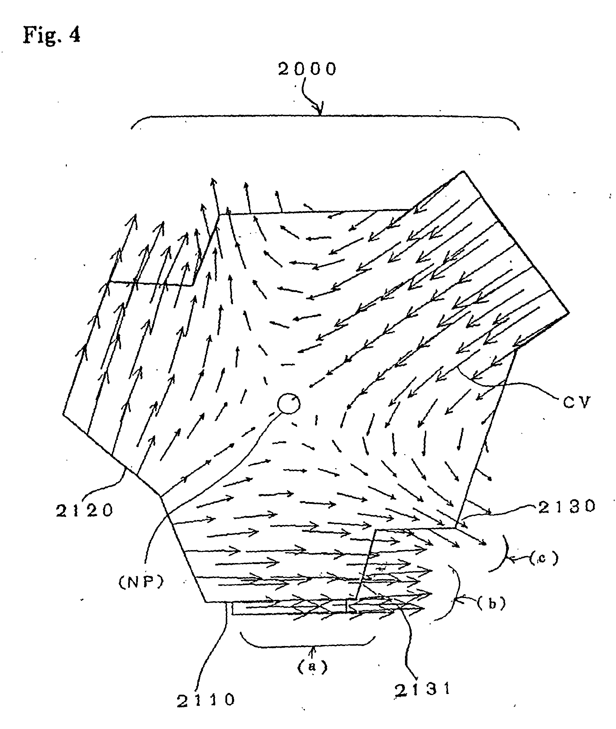

The present horn 2000 is a half-wavelength type, which is vibrated at an amplitude of half-wavelength when it is used, and laterally vibrates at an amplitude of about 5 µm in response to predetermined frequency induced by the ultrasonic vibration source means 500. Vibration vectors shown in Figs. 4 and 5 as arrows will be described below.

### 3. Ultrasonic Vibration Welding Treatment

### (1) Procedure of Welding Treatment

The present horn 2000 is attached to the ultrasonic vibration generator (vibration source means) 500, while the working face 2110 is faced to the member to be welded W2 on the table means 400. In this situation, the operation panel (means) 700 is manually manipulated to operate the nodal support means 200 through the control means 600 and then adjust a location of the present horn 2000 with the welding member W1 adsorbed thereto by the vacuum adsorption means 300. Ultrasonic vibration, such as that of half-wavelength, is induced in the present horn 2000 through the ultrasonic vibration source 500 to pressure-weld the member to be welded W2. The table means 400 is then moved in the direction of arrows M←→M' for a subsequent welding process.

### (2) Essence of Vibration Welding

A characteristic feature of the present horn 2000 is that vibration parallel to the working surface 2110 (lateral vibration component) is only induced in the present horn 2000 to promote the vibration welding treatment effectively. Vertical vibration to the working surface 2110 (vertical vibration component) is hardly induced even when a sufficient path line for the welding member W1 is secured, thereby improving the welding accuracy.

That is to say, the above mentioned characteristic feature resides in that the path line G of the welding member W1 is secured by inclination thereof with regard to the longitudinal central axial line (L) of the present horn 2000, thereby effective depth of the present horn 2000 being obtained.

The theory and function will be detailed in the following.

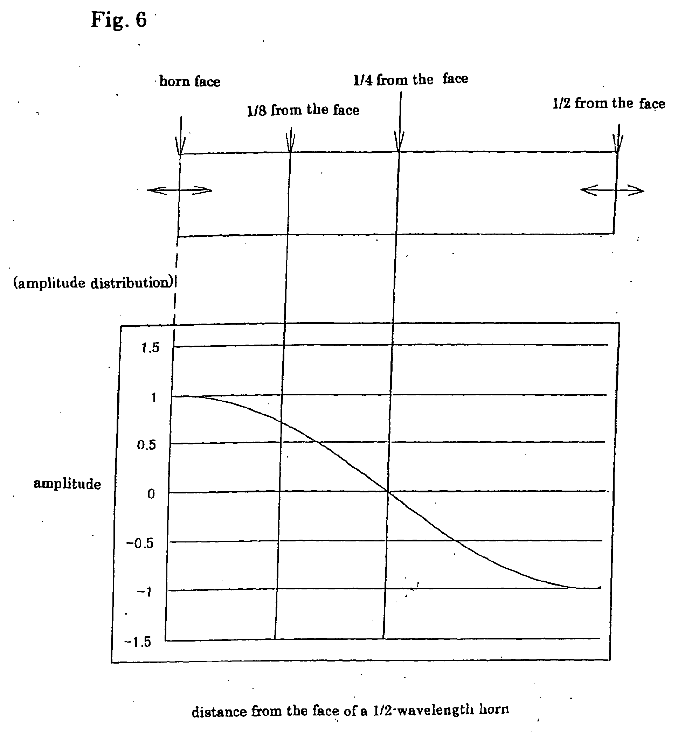

As a relationship between distance from a tip of the present horn 2000 and a degree of amplitude changes similarly as a COS wave as shown in Fig. 6, the amplitude is generally reduced to about 70 % at a point of 1/8-wavelength from the tip, which would cause a welding treatment of inferior quality.

According to the present horn 2000, however, it is possible to control a damping factor of amplitude to 10 % or less and induce ultrasonic vibration without accompanying with a vertical vibration component by effectively using deflective vibration which is induced in the present horn 2000 itself due to a specific shape of the welding operation part 2100.

Arrows shown in Figs. 4 and 5 indicate vibration vectors analyzed by means of a vector analyzer (not shown). Length and direction of these vectors will be described as an amplitude value and a vibration mode, respectively.

In general, when the vibration horn is inclined to the working surface to secure the path line G, a vertical component of vibration is induced to inconveniently result in inferior quality of welding.

In contrast, the present horn 2000 induces deflective vibration in the welding operation part 2100 of the present horn 2000 when ultrasonic vibration is applied due to the specific shape thereof as has been described above, which removes a vertical component of ultrasonic vibration so that vibration vectors run completely parallel to the working surface 2110 as shown in Figs. 3 to 5.

More precisely, when vibration vectors in the compressive direction (CV) with regard to central axial line (L) of the present horn 2000 are assigned to the inner end surface 2220 as shown in Fig. 4, these vibration vectors (CV) are directed to a getting away direction from the concave surface 2120 at the tip of the present horn 2000 and induce vibration in the direction coincident with and parallel to the working surface 2110. This fact is clear from a state of vibration vectors (CV) within an area (a) shown in Fig. 4.

Further, these vibration vectors (CV) are emitted from the first concave surface 2131 or an area (b) shown in Fig. 4, while the rest of vectors (CV) are directed to the direction of convex portion 2136 or an area (c) shown in Fig. 4 and then emitted therefrom.

On the other hand, when vibration vectors in the tensile direction (PV) are assigned to the present horn 2000 as shown in Fig. 5, the vibration vectors (PV) induce vibration equivalent to and in the opposite direction of those vectors (CV). It is also clear that vibration is induced by the vibration vectors (PV) coincident with and parallel to the working surface 2110.

Furthermore, the present horn 2000 is firmly supported by the support rod 220 at the nodal point (NP) while inducing such vibration vectors CV and PV, so that vibration vectors are not lost, the welding operation is conducted effectively, no vibration is transmitted to the support rod 220 and the present horn 2000 is firmly supported.

An increase in frequency can be attained as a matter of course, because the damping factor of amplitude from the tip of the present horn 2000 is relatively low to keep depth thereof sufficiently long.

With regard to a shape of the welding operation part 2100, it is understood that the working surface 2110 may be modified to further arrange bifurcately in a corresponding location at an angle of 180° without departing of the scope of this invention.

It has been confirmed that only lateral vectors (CV) and (PV) parallel to the working surface 2110 are assigned thereto in a situation where sufficient pressure is added in the direction to the working surface 2110 from just above thereof and, as a result, the welding member W1 and the member to be welded W2 can be effectively weld-treated.

For reference, definite examples of materials, numeral value, etc. used in the preferred embodiments are as in the following:
W1: semiconductor chip part
W2: circuit substrate
horn: made of titanium alloy
inclined angle A: about 20 to 50°
concave angle B: about 155°
the first included angle C: about 105°
the second included angle D: about 145°
convex angle: about 110°
frequency: 40 kHz
amplitude: 5 micron
weld time: 0.1 to 0.3 sec.
pressure: 5 to 30 kg weight
maximum working area: 20 mm square
(amplitude uniformity: more than 90 %; vertical component ratio: less than 5 %; frequency: 40 kHz)

### Preferred Embodiment 2

### 1. External Appearance

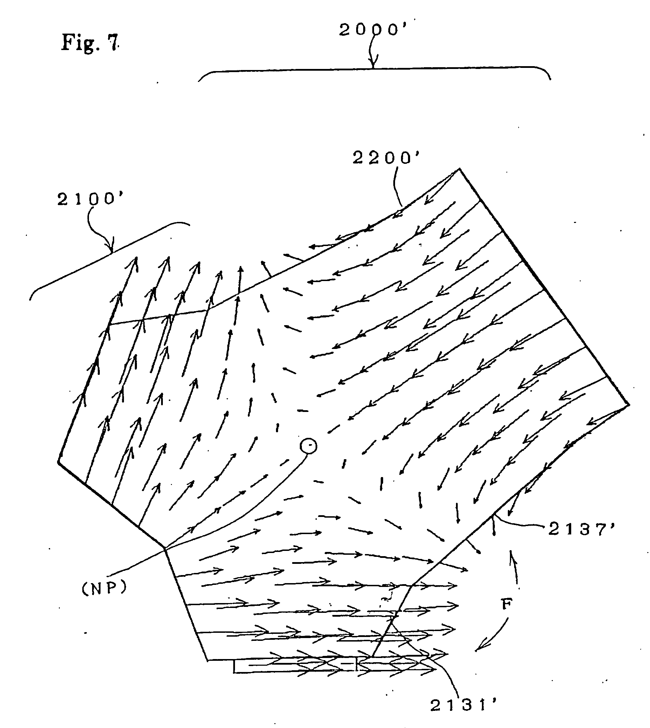

A characteristic feature of a horn 2000' shown in Fig. 7 is a partial modification of the present horn 2000 regarding an external appearance thereof.

Differences from the present horn 2000 is that an inclined surface 2137' extended to a first concave surface 2131' is continued to a column part 2200' in a welding operation part 2100' extended to the column part 2200', and that the first concave surface 2131' and the inclined surface 2137' meet each other at an obtuse angle of about 160° as a third included angle F, on the other hand, such a concavity is shallower compared with the first inclined angle C of the first concave portion 2133 in the present horn 2000, easily narrowed down and extended to the column part 2200' as it is.

### 2. Function

Function of the present horn 2000' is in common with that of the horn 2000 and will not herein be further described.

### Preferred Embodiment 3

### 1. External Appearance

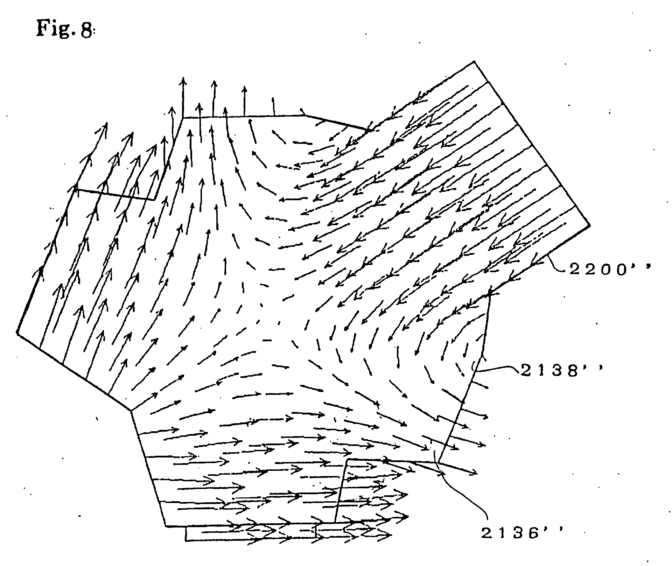

A difference between a horn 2000" as shown in Fig 8 and the present horn 2000 or 2000' is that a slightly heaved portion 2138" is formed between a convex portion 2136" and a column part 2200" of the present horn 2000".

### 2. Pressurizing Means 200"

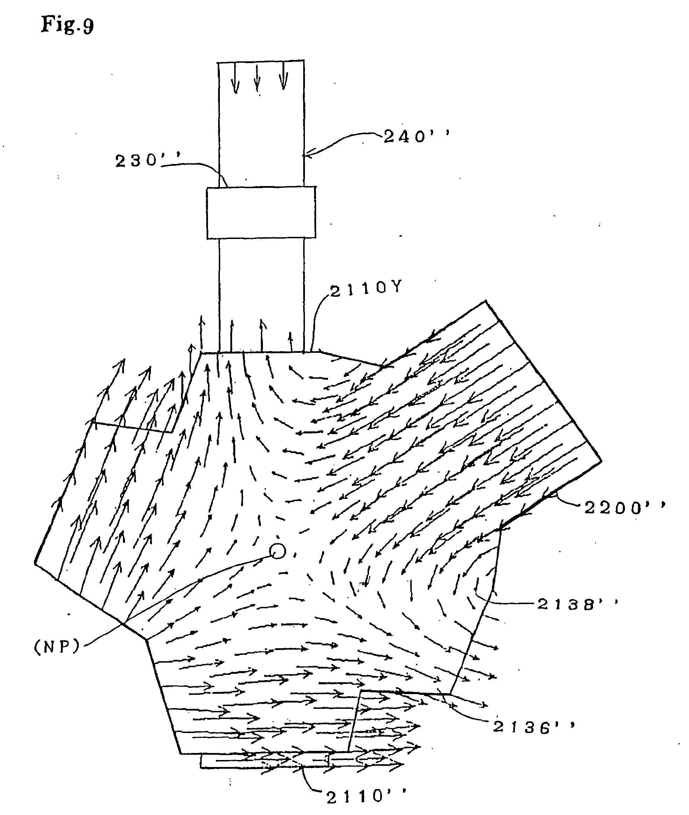

A resonance bar 240" provided with a pressurizing surface 230" is connected to a support surface 2110Y, which is located above a nodal point NP, or fur just above a working surface 2110" of the present horn 2000" as shown in Fig. 9. The resonance bar 240" cooperates with an up-down drive means (not shown).

### 3. Function

Function of the present horn 2000" is in common with that of the horn 2000 or 2000' and will not herein be further described.

### Industrial Availability

Industrial availability described above will be summarized as in the following:
① No vibration of vertical component is induced on the working surface of the ultrasonic vibration horn, thereby greatly improving welding quality.
② A sufficient path line (working space) formed between the ultrasonic vibration welding means and the working material such as welding member improves workability.
③ No inclination of working surface occurs even under a condition of highly pressurized welding operation, thereby achieving a welding treatment of high quality.
④ Less damping factor of amplitude and longer depth of the ultrasonic vibration horn makes it possible to increase frequency to be used, cause no inconvenience of weld efficiency under an ultrasonic vibrating condition of one-wavelength or less and down size or reduce weight of the ultrasonic vibration welding equipment.
⑤ No vibration of vertical component seldom damages the welding member.

## Claims

1. An ultrasonic vibration welding equipment (1000) in which welding members including hot-melt materials such as thermoplastic resins are contacted with each other under pressure and subjected to a welding treatment by applying ultrasonic vibration, **characterized in that** a nodal point (NP) where no vibration is induced is arranged just above a working surface (2110) of said welding treatment, while an ultrasonic vibration horn (2000, 2000' or 2000") is supported in the vicinity of the nodal point (NP).

2. An ultrasonic vibration welding equipment (1000) claimed in claim 1 in which an ultrasonic vibration horn (2000, 2000' or 2000") is arranged to incline a central axial line of the ultrasonic vibration horn (2000, 2000' or 2000") at an angle of about 20 to 50° to a working surface (2110).

3. An ultrasonic vibration horn (2000, 2000' or 2000") fixed to an ultrasonic vibration welding equipment in which welding members including hot-melt materials such as thermoplastic resins are contacted with each other under pressure and subjected to a welding treatment by applying ultrasonic vibration, **characterized in that** a convergently inclined working surface (2110) and a corresponding surface (2110X) thereof are arranged on a welding operation part (2100) having a symmetrical section with regard to a central axial line (L) along to a longer direction thereof, while a concave part (2133) extended to the working surface (2110) and the corresponding surface (2110X) is formed so that only ultrasonic vibration parallel to the welding working surface (2110) is induced on the working surface (2110).

4. An ultrasonic vibration horn (2000, 2000' or 2000") in which an inclined angle of said concave part (2133) is an obtuse angle.

5. An ultrasonic vibration horn (2000, 2000' or 2000") claimed in claim 4 in which the obtuse angle is 90 to 180° .
